Europäisches Patentamt

(19) European Patent Office

Office européen des brevets

(11) Publication number: **0 006 318**
**A1**

## EUROPEAN PATENT APPLICATION

(21) Application number: 79300988.7

(22) Date of filing: 30.05.79

(51) Int. Cl.³: **C 04 B 31/34,** B 32 B 13/02, E 04 C 2/04

(30) Priority: 31.05.78 GB 2483878

(43) Date of publication of application: 09.01.80 Bulletin 80/1

(84) Designated Contracting States: **AT BE DE FR GB IT NL SE**

(71) Applicant: **PLASTICISERS LIMITED, Old Mills Drighlington, Nr., Bradford, BD11 1BY Yorkshire (GB)**

(72) Inventor: **Firth, Colin, 28 Dean Parke Drive Drighlington, Near Bradford Yorkshire (GB)**
Inventor: **Ellis, Geoffrey, 2 Lidgett Park Gardens, Leeds 8 West Yorkshire (GB)**

(74) Representative: **Shipton, Gordon Owen et al, W.P. THOMPSON & CO. Coopers Building Church Street, Liverpool L1 3AB (GB)**

(54) **Reinforced shaped articles, the production thereof and novel fibres and filaments for use therein.**

(57) Shaped reinforced articles formed from a water-hardenable mass having dispersed at least through a portion of the mass cut. longitudinally oriented fibrous reinforcing elements formed from synthetic plastics material each of which has a microscopic and/or macroscopic keying action with the hardened water hardenable mass. The elements are preferably formed from novel films, fibres or filaments the surface of each of which is provided with voids and/or indentations and/or protuberances and/or striations most of which have a width or diameter of 150 microns or less. The reinforced articles are produced by dispersing the fibrous reinforcing elements in an aqueous slurry of the water-hardenable mass and the mass then hardened.

DESCRIPTION

"REINFORCED SHAPED ARTICLES, THE PRODUCTION THEREOF AND NOVEL FIBRES AND FILAMENTS FOR USE THEREIN".

The present invention relates to reinforced, shaped articles made from a water-hardenable mass, method of forming such articles and novel fibres and filaments for use therein.

It has been known for many years to provide water-hardenable masses with fibrous contents composed of inorganic fibres such as asbestos, the fibres being mixed with an aqueous slurry of the water-hardenable mass. It has also been proposed to use glass fibre as a reinforcing material in water-hardenable masses.

In an attempt to substitute synthetic plastics materials for inorganic materials it has been proposed to use sheets of synthetic plastics film which have been preformed into a network of interconnected fibres as reinforcing elements in water-hardenable masses. Such use, however, requires a new type of technology in which it is not possible to use existing plant and machinery hitherto used for the production of asbestos or glass fibre containing water-hardenable masses.

It has now been surprisingly found that cut, longitudinally oriented fibrous reinforcement elements formed from synthetic plastics material and which have a microscopic and/or macroscopic keying action with the hardened water-hardenable mass can be utilized to give an increased flexural strength to the water-hardenable mass and, furthermore can be utilized with existing machinery.

In one embodiment the invention provides a shaped article formed from a water-hardenable mass (as hereinafter defined) and having dispersed at least through a portion thereof, cut longitudinal orientated fibrous reinforcing elements formed from synthetic plastics material, each of said fibrous reinforcing elements having a microscopic and/or macroscopic keying action (as hereinafter defined) with the hardened water-hardenable mass. The concentration of fibrous reinforcing elements in that portion of the hardened water-hardenable mass may be from 0.5 to 10% weight part of the hardened mass.

In another embodiment the invention provides a method of producing shaped articles from a water-hardenable mass (as hereinafter defined) which comprises casting or moulding an article from a mixture of a water-hardenable mass and water at least a portion of said mixture of water-hardenable mass and water having dispersed therethrough cut, longitudinally orientated fibrous reinforcing elements formed from synthetic plastics material and having a microscopic or macroscopic keying action with the hardened water-hardenable mass, and hardening said mass.

The synthetic plastics material may be any such material which is capable of being formed into filaments or fibres which are longitudinally orientated and have the strength characteristics required for the article to be made.

Preferably the synthetic plastics material is a polypropylene or a copolymer of propylene with another olefin such as ethylene or mixtures of such polymers and/or copolymers or a mixture of polypropylene with another poly olefin such as polyethylene.

By the expression water-hardenable mass is to be understood a mass which comprises any dry or substantially dry inorganic material or mixture of materials which when mixed with water sets to a solid, rigid mass. Portland cement and gypsum are examples of such materials. The Portland cement may of course be mixed with sand and aggregate as in the formation of concrete.

By the expression macroscopic keying action is to be understood that the shape or configuration of the fibrous elements prevents movement thereof through the hardened water-hardenable mass. This macroscopic keying effect can be achieved in a number of ways. Thus since in practice dispersion of the fibrous reinforcing elements throughout the mixture of water-hardenable mass and water will in almost all cases result in the fibrous element being bent and/or cockled and/or twisted, providing the element with a non-circular cross-section will result in there being a natural physical resistance to movement of the fibrous element through the hardened water-hardenable mass. Such non-circular cross-sections may for example be triangular, square, polylobal or ragged.

The physical deformation of the fibrous element may also be carried out beforehand - e.g. the non-circular cross-section filaments from which the fibrous elements are formed may be twisted and the twist set in the filament before it is cut to required length.

Physical deformation such as crimping is also effective with circular cross-sections as non-circular ones. Elements whose cross-section varies along their length may also be used. Tapered elements are an example of such elements to which would be effective even where they take up a straight position in the hardened water-hardenable mass.

By the expression microscopic keying effect is to be understood that the surface of the element is provided with voids and/or indentations and/or protruberances and/or striations (striae) of the order of the particle size of the water-hardenable mass. In general the width or diameter of the voids etc. may be from 1 to 150 microns preferably 1 to 100 microns. In practice a range of widths or diameters will be present, but the predominent width or diameter is chosen to provide the required keying characteristic.

The surface structure which provides such microscopic keying effects can be achieved in a number of ways. When a polymer such as polypropylene is extended and stretched to orientate the polymer molecules the conditions of stretching particularly temperature are chosen to give a homogeneous structure which provides a smooth surface in the resulting film or filament. The necessary irregularities in the surface structure may be produced by abrading the surface to produce a plurality of grooves. Again the incorporation of relatively large hard particles e.g. of silica, finely divided glass, titanium dioxide, carbon black or preferably the naturally occurring oxides or those oxides present in the water-hardenable mass, and which are capable of forming a chemical bond with the particles of water-hardenable mass, in to the polymer melt encourage tearing of the surface of the film or filament during stretching and also fracture of the outer skin of the film or filament.

Again particles may be embedded in the surface of the filament or film during the cooling thereof immediately after the film or filament is extruded and whilst the film or filament is still semi-molten.

The requisite surface structure may also be achieved by stretching the film or filament at a temperature lower than that which produces a homogeneous structure, (hereinafter referred to as "cold stretching"). Such cold stretching can induce striations (striae) in the surface of the film or filament and when adjacent striae are close enough together they can form fine fibrils which may become detached at one end to protrude from the surface. Such cold stretching can also be combined with any of the other above mentioned methods of producing the requisite surface structure.

The fibrous reinforcing elements are formed by cutting (e.g. chopping) the filaments or in the case of film the film is first formed into a plurality of filaments in any known manner wherein some or all of adjacent filaments may be joined at irregular or regular intervals to form a network, and the resulting filaments whether or not in the form of a network cut to appropriate length. The invention contemplates the use of filaments from 1 to 2500 microns in diameter.

In a further embodiment therefore the invention provides longitudinally oriented films or filaments composed of synthetic plastics material the surface of which is provided with voids, and/or indentations and/or protruberances and/or striations (striae) having a width or diameter of 150 microns or less. The present invention also provides fibrous reinforcing elements formed from such filaments or films. The present invention also includes such films, filaments and fibrous reinforcing elements in which a proportion of voids etc. have widths or diameters greater than 150 microns. The synthetic plastics material is preferably a polypropylene or a copolymer or propylene with other olefines such as ethylene or a mixture of such polymer and copolymer or a mixture of polypropylene with another polyolefin such as polyethylene.

The shaped articles of the invention show an increase in flexural strength (as evidenced by three or four point bending tests). The degree of reinforcement is a function of fibre geometry (length and diameter or width), concentration and of the surface structure of the fibrous reinforcing elements.

The formation of the fibres of which the fibrous reinforcement elements of the invention are made up is preferably effected by fibrillating a longitudinally oriented film of synthetic plastics material. By using fibrillation techniques the striations and splits in the fibre surface can be heightened and deepened and the splits can, because of preferential fibrillation at the splits, be caused to extend right through the fibre. Fibrillation techniques also reduce the tendency for additives to be encapsulated by a skin of polymer during extrusion in that at least a proportion of such additives already encapsulated during extrusion are exposed again by the fibrillation action which forms fresh surfaces in the extruded film by a slitting or splitting technique. The fibrillation preferentially occurs where there are particles in the fibres.

Surfactants can also be used to render the surface of the fibres hydrophilic and improve the wettability of the fibres and also enhances penetration of the particles (such as cement) of water-hardenable mass into the striations etc. on the fibre surface.

The invention will be further illustrated by the following Examples which are purely illustrations:-

### EXAMPLE 1

Polypropylene homopolymer (M.F.I. 8-18) filaments with the required particles incorporated by a mixing process prior to extrusion were extruded under the following conditions.

Extrusion and die temperature 220°C

Die hole 0.7 mm diameter

Air cooling of filaments

First godet speed 8 m/min

Second godet speed 24 m/min

Stretching godet temperature 125°C

to produce 15 denier/filament fibres

Titanium dioxide powder (type Tiona WD from Laporte Ltd.) with most particles of a size less than 5 micron (5% of particles greater than 5 micron. Maximum size 53 micron), was added to the homopolymer melt in a concentration of 5% (w/w).

A very fine diffuse surface microstructure was obtained.

### EXAMPLE 2

The processing conditions of Example 1 were repeated replacing the $TiO_2$ with

1% Fullers Earth (Surrey finest ex.Laporte) which has particle diameters which permit passage through 200 mesh fitter pack.

This produced highly divided fibrillated filaments (i.e. fibrils formed on surface of filament and some breakdown of filaments into separate fibrils).

### EXAMPLE 3

The processing conditions of Example 1 were repeated replacing the $TiO_2$ with 1.5% (w/w) of Talc (grade 20/m/005 supplied by Durham Chemicals Ltd.)

The talc consisted of:-

|  |  |
|---|---|
| | Silica 53% |
| | Magnesia 33% |
| | Iron Oxide 1.3% |
| | Lime 0.5% |
| | Alumina 6% |
| and | Titanic, phosphoric and sulphuric anhydrides |

Particle sizes of the talc spread round 20 micron Striations were formed in and particles of talc protruded from the surface of the filaments.

### EXAMPLE 4

The processing conditions of Example 1 were repeated replacing the $TiO_2$ with 4.0% (w/w) Silicon dioxide particles (Luf. X40 MB ex Ciba-Geigy).

Striations (striae) and voids were formed in the surface structure of the filaments and some surface fibrillation was beginning to be evident.

### EXAMPLE 5

The processing conditions of Example 1 were repeated replacing the $TiO_2$ with 1.0% (w/w) of ordinary Portland cement powder which consisted predominantly of Calcium, Aluminium, Iron, Silicon and Magnesium oxides in various forms and combinations with water.

### EXAMPLE 6.

Multifilaments produced as described in Example 1 were tested in the following manner to test their bonding strength with cement.   Bundles of 216 filaments were partially embedded to a depth of 20 mm in an aqueous cement paste (water/cement ratio 0.4) and the cement paste allowed to harden under water for 7 days.   The free ends of the tapes were then subjected to a pull out test using an Instron Model 1026 Testing Machine.   The peak loads were recorded and are reproduced in Table I below together with the composition of the fibre.   All the bundles were completely pulled out of the cement in these tests.   The breaking load of similar bundles of 216 filaments were tested in each case and the ratio of Pull Out Load/Breaking Load determined.   These ratios are also set out in Table I below.

## TABLE I.

| FIBRE COMPOSITION | DENIER/ FILAMENT | $\frac{\text{PULL-OUT LOAD}}{\text{BREAKING LOAD}}$ X 100 |
|---|---|---|
| 100% Polypropylene | 13 | 88 |
|  | 16 | 95 |
| Polypropylene + 1.0% solids of surfactant applied | 16 | 99 |
| Polypropylene +10% chalk+ | 11 | 100 |
| Polypropylene + 5% Talc 20/m/005 | 18 | 97 |

Pull out loads are high because of the high fibre surface area/unit mass fibre for such fine deniers.

+Omya Hydrocarb (Melbourn Chemicals) 1.5 micron mean particle size

## EXAMPLE 7

Tapes were produced by extruding a blend of:
Polypropylene homopolymer MFI 1.5        91%
High density Polyethylene MFI 1.5        9%
Selected additives as specified below

through a slit die.   The tapes were stretched 7.0 times to orientate the polymer chains to give a final thickness of oriented tape of 20 microns. All the tapes were then mechanically fibrillated in known manner by passing the tapes over a primed roller having 15.7 pins per cm, adjacent rows of pins being staggered by 0.05 mm, the roller surface being rotated at a speed equal to 2.2 times the forward speed of the tape. The fibrillated tapes were then subjected to the cement pull-out test described in Example 6. The ratio of Pull Out load/ Breaking Load was determined using as the pull out load the average for those tapes which pulled out and discounting those which did not. The results including tape denier are set out in Table II below.

| FIBRE COMPOSITION | TAPE DENIER | $\frac{PULL\ OUT\ LOAD}{BREAKING\ LOAD}$ X 100% | NO.OF TAPES NOT PULLING OUT |
|---|---|---|---|
| No selected additives additives | 6687 | 57 | NONE |
| No selected additives but 1.0% solids surfactant applied | 6753 | 81 | NONE |
| 1% Fullers Earth | 7920 | 82 | NONE |
| 1% O.P.C. | 7146 | 78 | NONE |
| 6% O.P.C. | 6957 | 80 | 1 out of 4 |
| 10% Talc 10/m/005 | 6057 | 99 | 1 out of 4 |
| 1% Talc 20/m/005 | 6674 | 70 | NONE |
| 5% Talc 20/m/005 | 7389 | 77 | 1 out of 4 |
| 8% Luf. X40 | 6201 | 84 | 2 out of 4 |

* Talc grade 10/m/005 is similar to 20/m/005 with particles sizes about 10 micron.

Examples 1 to 5 are typical of formulations in 'normal' conditions of polypropylene filament extrusion and stretching, i.e. which in the absence of the additive

0006318

produce a homogeneous structure.

For higher speeds of production increased oven temperatures are required to permit satisfactory stretching. During satisfactory stretching of polypropylene there is sufficient heat energy supplied to assist melting and drawing out of the polymer chains into the oriented fibre. The surface morphology is typically smooth. If this energy is lower (i.e. lower stretch godet or oven temperatures) then 'cold' stretching occurs. The surface and interior structure fractures forming voids and striations as the polymer chains have insufficient energy to respond sufficiently rapidly to the mechanical forces of stretching and so break and separate. A typical 'cold' stretching conditions for producing filaments would be for example when a product normally being run at 160°C stretching temperature, at a stretch speed of say 100 m/min is run at temperatures below 140°C when the onset of 'cold' stretching occurs.

For lower speeds of production, this temperature for onset of 'cold' stretching is correspondingly lower. The quantity of heat for stretching is more important than absolute value of temperature, and so size of tow of filaments and rate of heating are most important in influencing cold stretching temperature.

0006318

## CLAIMS.

1.  A shaped reinforced article formed from a water-hardenable mass characterised in that there are dispersed at least through a portion thereof, cut longitudinal orientated fibrous reinforcing elements formed from synthetic plastics material, each of said fibrous reinforcing elements having a microscopic and/or macroscopic keying action with the hardened water-hardenable mass.

2.  A shaped article as claimed in claim 1, characterised in that the fibrous reinforcing elements in that portion of the hardened water-hardenable mass containing the reinforcing elements, constitute from 0.5 to 10% by weight of the total weight of that portion of the said hardened mass.

3.  A shaped article as claimed in claim 1 or 2, characterised in that the fibrous reinforcing elements are disposed throughout the whole of the hardened water-hardenable mass.

4.  A shaped article as claimed in claim 1, 2 or 3 characterised in that the synthetic plastics material is polypropylene or a copolymer of propylene with another olefin or is a mixture of such polymers and/or copolymers or a mixture of polypropylene with another polyolefin.

5.  A shaped article as claimed in any of the preceding claims characterised in that the fibrous reinforcing elements are produced by fibrillating an oriented film of synthetic plastics material.

6.  Longitudinally oriented films, fibres or filaments composed of synthetic plastics material, characterised in that the surface of each of said films, fibres or filaments is provided with voids, and/or indentations and/or protruberances and/or striations which have a width or diameter of 150 microns or less.

7. Longitudinally oriented films, fibres or filaments as claimed in claim 6, characterised in that a proportion of the voids and/or indentations and/or protruberances and/or striations have a width or diameter greater than 150 microns.

8. A shaped article as claimed in any of claims 1 to 5, characterised in that the fibrous reinforcing elements are formed from or composed of films, fibres or filaments as claimed in claim 6 or 7.

9. A method of producing shaped articles from a water-hardenable mass which comprises casting or moulding an article from a mixture of a water-hardenable mass and water characterised in that at least a portion of said mixture of water-hardenable mass and water having dispersed therethrough cut, longitudinally orientated fibrous reinforcing elements formed from synthetic plastics material each of said fibrous reinforcing elements having a microscopic or macroscopic keying action with the water-hardenable mass when hardened, and hardening said mass.

10. A method as claimed in claim 9, characterised in that the fibrous reinforcing elements are as defined in any of claims 2 to 8.

## DOCUMENTS CONSIDERED TO BE RELEVANT

| Category | Citation of document with indication, where appropriate, of relevant passages | Relevant to claim |
|---|---|---|
| X | GB - A - 1 305 206 (BRITISH ROPES LTD.) <br> * claims 1, 2, 5, 7 and page 1, <br>   lines 84 to 85 * <br><br> -- | 1-4, <br> 6, <br> 7-10 |
| X | US - A - 3 591 395 (J.J. ZONSVELD et al.) <br> * claims 1 to 3 * <br><br> -- | 1-5, <br> 9-10 |
| X | DE - A - 1 958 342 (T. MURATA) <br> * claim 1 and example 1 and page 4, <br>   lines 1 to 24 * <br><br> -- | 1-5, <br> 6, <br> 8-10 |
| X | DE - A - 2 701 267 (SOLVAY & CIE) <br> * claims 1 and 4 and page 7, <br>   line 4 * <br><br> -- | 1-4, <br> 9-10 |
| X | DE - A - 2 718 516 (MONTEFIBRE S.P.A.) <br> * claims 1, 6 * <br><br> -- | 1-4, <br> 9-10 |
| P,T | DE - A - 2 816 457 (ETERNIT-WERKE <br>   L. HATSCHEK et al.) <br> * pages 7 to 10 and fig. 1 to 5 * <br><br> -- | 1-10 |
| P,A | DE - A - 2 819 794 (DANSK ETERNIT- <br>   FABRIK) <br><br> ---- | |

**CLASSIFICATION OF THE APPLICATION (Int. Cl.³)**

C 04 B   31/34
B 32 B   13/02
E 04 C    2/04

**TECHNICAL FIELDS SEARCHED (Int.Cl.³)**

B 32 B   13/00
C 04 B   11/14
C 04 B   13/24
C 04 B   17/05
C 04 B   29/04
C 04 B   31/00
C 04 B   35/80
E 04 C    2/04

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X | The present search report has been drawn up for all claims

| Place of search | Date of completion of the search | Examiner |
|---|---|---|
| Berlin | 09-08-1979 | HÖRNER |

EPO Form 1503.1   06.78